# EUROPEAN PATENT SPECIFICATION

(11) **EP 2 117 834 B1**
(45) Date of publication and mention of the grant of the patent: **06.04.2011**
(21) Application number: 08705134.8
(22) Date of filing: 05.02.2008
(51) Int. Cl.: B32B 27/18, B32B 27/32, C08J 5/18

(54) **STRETCHED POLYOLEFIN MATERIALS AND OBJECTS PRODUCED THEREFROM**
GESTRECKTE POLYOLEFINMATERIALIEN UND DARAUS HERGESTELLTE GEGENSTÄNDE
MATÉRIAUX DE POLYOLÉFINE ÉTIRÉS ET OBJETS OBTENUS À PARTIR DE CEUX-CI

(30) Priority: 05.02.2007 EP 07101763; 24.09.2007 EP 07117062
(43) Date of publication of application: 18.11.2009
(73) Proprietor: Lankhorst Pure Composites B.V., 8607 AD Sneek (NL)
(72) Inventor: JACOBS, Johannes Antonius Joseph, NL-7002 JE Doetinchem (NL)
(74) Representative: Hatzmann, Martin
(86) International application number: PCT/NL2008/050065
(87) International publication number: WO 2008/097086

(56) References cited:
- WO-A-03/008190
- WO-A-03/099911
- WO-A-2006/131450
- US-A- 5 118 566
- US-A1- 2007 007 688

## Description

The invention is directed to stretched polyolefin materials having improved mechanical properties, in particular improved strength and stiffness (E-modulus). The invention is furthermore directed to objects (fabric, plates and three dimensional structures) produced from these stretched polyolefin materials.

From WO-A-03/08190 it is known that co-extruded polyolefin materials (tapes, films or yarns) of very high strength and stiffness can be produced by stretching these materials to high stretch ratios (*viz*. higher than 12). The E-modulus of these materials can be as high as at least 10 GPa, while the tensile strength can easily be at least 250 MPa. A preferred stretching process according to WO-A-03/08190 involves multi-stage stretching, preferably at different temperatures.

US-A-2007/0007688 discloses polymers obtained by gelspinning.

US-A-5 118 566 discloses biaxially oriented polyolefin materials, wherein the mechanical properties are improved by the addition of resins, such as styrene polymers. High stretch ratios are not disclosed nor suggested in this document.

WO-A-2004/101660 describes biaxially oriented polyolefin films, which are microporous.

US-A-2007/0007688, US-A-5 118 566 and WO-A-2004/101660 do not describe or suggest monoaxially stretching of polyolefinic materials to obtain high stiffness values.

The present invention seeks to provide stretched polyolefin materials having comparable or even improved mechanical properties as compared to those obtained according to WO-A-03/08190, while not being limited to co-extruded materials.

It was found that the use of certain additives, in particular nano-materials, such as nucleating agents, in combination with the polyolefins leads to products that can be stretched at much higher stretch ratios of the polyolefins and thus may provide a polyolefin material having very favorable final mechanical properties, in particular an excellent stiffness and/or strength. Thus, in a first aspect the present invention is directed to a stretches polyolefin material having an E-modulus of at least 17 GPa, preferably at least 20 GPa and a strength of at least 400 MPa, comprising a polyolefin and one or more nano-materials, which polyolefin material is obtainable by a process comprising a stretching step wherein the material is stretched at a stretch ratio of at least 16.

Preferably the stretched polyolefin materials of the present invention have an E-modulus of at least 24 GPa, more preferably at least 26 GPa even more preferably at least 29 GPa.

Preferably the stretched polyolefin materials of the present invention have a strength of at least 500 MPa, more preferably at least 750 MPa, even more preferably at least 860 MPa.

The products of the invention are suitably produced by a process comprising the steps of: providing a compound of a polyolefin material and a nano-material, which nano-material is dispersed preferably on a molecular scale in the polyolefin material, extruding this compound followed by a stretching step wherein the material is stretched to a total stretch ratio of at least 16. Dispersion of the nano-material, such as a nucleating agent may be achieved in a separate step wherein the nano-material is blended with a first portion of the polyolefinic material, thus producing a masterbatch (*e.g*. having a content of nano-material, such as a nucleating agent of up to 50 wt.%), and subsequently mixing this masterbatch with the remainder of the polyolefinic material, prior to the extrusion step. In this way good dispersion of the nano-material throughout the polyolefinic material is favoured.

In the context of this invention, the material is defined as meeting a minimum level of the total stretch ratio (TSR). TSR is defined as the degree of (monoaxially) stretching from an isotropic melt to the final tape or film. This is generally defined by the difference in speed between the stretch rollers. The actual value of the TSR can be determined from the birefringence and/or the E-Modulus of the final film, tape or yarn (in stretching direction).

The polyolefinic materials of the present invention, which can be obtained by the above-described process, can be co-extruded polyolefin materials, as well as single composition materials, *e.g*. polyethylene or polypropylene monomaterials. Also encompassed by the present invention are multifilament fibers, either based on co-extruded fibers or on monomaterial fibers. If the co-extruded materials of WO-A-03/08190 are used in accordance with the present invention, products having even more improved values for stiffness and/or mechanical strength may be obtained.

It is believed that the polyolefinic materials of the present invention are novel *per se,* and differ from the prior art materials in particular in view of their high stiffness (E-modulus) of at least 17 GPa, preferably at least 20 GPa. The stiffness may suitably be determined by ISO 527.

The strength of the materials of the present invention is also high when compared to prior art materials. Typically tensile strength of more than 400 MPa, or even more than 500 MPa can be obtained. The tensile strength may suitably be determined by ISO 527.

The nano-material that is used in the present invention may act as a nucleating agent, preferably as an inorganic nucleating material. Preferred inorganic nucleating agents are selected from one or more components selected from plate shaped (layered) inorganic materials, such as natural or synthetic nanoclays, nanoclays modified with organic groups; fibrous or needle shaped materials, such as metal whiskers, carbon whiskers or nanotubes; spherical materials; zeolites; alumina; silica; and alumino or magnesium silicate materials. These materials are preferably used in a very finely divided form, usually also referred to as nano-materials (*e.g*. nano-clays). The particles making up these materials may have for instance at least one dimension in the nanomolecular scale, *e.g*. 1-100 nm, whereas in the other dimensions it can be several tens or hundreds of nm, *e.g*. 10- 1000 nm. Suitable clays are for instance clays of the smectite type, in particular montmorillonite, such as the commercially obtainable Nanocor™, but also needle-shaped materials. Suitable zeolites are for instance ZSM-5, zeolite beta, mordenite, ferrierite, and/or zeolite Y.

The nano-material does not necessarily have to act as a nucleating agent, *viz*. a compound that contributes to the nucleating properties of the polymeric material. It is also possible that it contributes to the stretching properties of the polyolefin in some other way and by result to the material's improved mechanical properties, in particular strength and stiffness. For instance, without wishing to be bound by theory, it is believed that the nano-material may facilitate the stretching process, for example by changing the structure of the interface between the resulting crystalline parts in the material and the amorphous phase.

It is also possible to use organic nucleating agents. Organic nucleating agents generally require a higher stretch ratio to obtain the improved mechanical properties as compared with the inorganic nucleating agents. Suitable organic nucleating agents are sorbitol derivatives, such as 1,3:2,4-di(3,4-dimethylbenzylidene) sorbitol (DMDBS), commercially obtainable under the trade name Millad™, *e.g*. Millad™ 3988. Other suitable nucleating agents are those obtainable under the tradename Hyperform™.

Preferably the amount of nano-material is less than 10, more preferably less than 5, even more preferably less than 3 wt.%, yet even more preferably less than 2 wt.%, most preferably about 1 wt.%, based on the weight of the final (stretched) material. The minimal amount of additive may vary, and is typically around 0.01 wt.%, preferably around 0.05 wt.%, more preferably around 0.1 wt.%.

The degree of dispersion of the nano-material (in particular nanoclay) in the polymeric material may range from an intercalated structure to a completely exfoliated structure (*i.e*. the highest degree of dispersion, wherein the particles making up the nano-material are completely separated from each other by the polymer material, preventing agglomeration of the nano-material). Most preferably, the nano-material is nearly completely to completely exfoliated. The nano-material can be provided either separately or together with the polymer in liquid, powder or pellet form. Also it can be provided as a (concentrated) masterbatch separately or together with the rest of the polymeric material. Also it can be premixed and/or compounded with the polymeric material before it is provided to the extruder.

It is highly surprising the nano-material additives in these low dosages produce such a marked influence on the stretchability of the polyolefin materials, and by result on their mechanical properties after stretching (because the materials can be stretched further, their mechanical properties can be improved vis-a-vis the prior art materials).

Without wishing to be bound by theory, it is believed that the well-dispersed nanoparticles may act as nucleating agent or nucleator, or even a "supernucleator", thus controlling the crystallization process of the polymer. The nanoparticles facilitate the stretching process. This results in a high stretching ratio, which may be close to the theoretical maximum. US-A-7 074 483 teaches that the addition of nucleating agents, in particular certain sorbitol derivatives to an extruded mixture may have a positive effect on the rate of crystallization of the melt.

It is also possible that the nano-materials promotes the stretching of the polyolefins in another way. An aspect of the present invention is that the stiffness of the polymeric materials increases linearly with drawing ratio up to very high stretching ratios. In accordance with the present invention, total stretch ratios of more than 21.3, preferably more than 22, more preferably more than 25 may be attained. For instance, a polypropylene material having a stiffness of as high as 22 GPa and a strength of 800 MPa can be produced by stretching to a stretch ratio of 26. This is remarkable, because in a typical prior art production process polypropylene normally tends to break at stretch ratios as low as 20 or even less.

As mentioned hereinabove, if an organic nucleating agent is used, the stretch ratio is preferably higher than 22. For inorganic nucleating agents lower stretch ratios, *e.g*. as low as 16 or more, may be sufficient.

The polyolefinic materials used in the present invention comprise preferably polyethylene (PE) or polypropylene (PP), or blends thereof. More preferably the polymeric materials comprise polypropylene. With respect to recycling of the products produced from polyolefin films, tapes and yarns it would be an advantage if all components of the material could be classified as the same material, such as polypropylene or polyethylene. The term "polypropylene" is used herein in its ordinary meaning to include also copolymers of propylene monomeric units and other monomeric units (in particular ethylene monomeric untits), but wherein the majority of the total number of monomeric units is propylene. Similarly, the term "polyethylene" includes copolymers of ethylene and other monomers (particularly propylene monomers), but in which copolymers the majority of the total number of monomers is ethylene.

It is highly advantageous to produce a material that can be recycled. This requires that the resulting recycled material can be considered as one material, instead of a blend of various components (no contamination). This is also possible in accordance with the present invention.

The stretching may be carried out in a single step, but it is also possible to use a multiple stretching step. By applying a multiple stretching step, in particular a two-stage stretching wherein the first stretching is performed at a lower temperature than the second, even higher stretch ratios may be obtained, leading to products having even higher values for stiffness and/or strength.

In another embodiment of the present invention, the nano-material, such as a nucleating additive, is added to one or more of the layers of a co-extruded material, in particular to produce a material similar to PURE™, the preparation of which is detailed in WO-A-03/08190. To this end, the clay or other nanomaterial-is added to the polyolefin blend from which one or more of the layers making up the co-extruded material is produced. The stretch ratio for materials in accordance with the present invention based on these co-extruded tapes, can be even lower, *e.g*. 15 or more. Already at these low stretch ratios a (co-extruded) material can be obtained having an E-modulus of at least 17 GPa, preferably at least 20 GPa and a strength of at least 400 MPa. On the other hand, the co-extruded tapes thus produced can be subjected to stretch ratios that are even higher than those described in WO-A-03/08190. Consequently, materials can be obtained having a very high stiffness. Thus in a specific embodiment, the present invention is directed to a monoaxially drawn polyolefin multilayer film, tape or yarn of the AB or ABA type, having a stretch ratio of more than 15, having an E-modulus of at least 17 GPa, preferably at least 20 GPa, substantially consisting of a central layer (B) of a polyolefin selected from polyethylene and polypropylene, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.%. The nano-material, such as the nucleating additive can be present in any one of the layers (A) or (B) of this embodiment. Preferably it is present in the (B) layer or both layers. The stretched polyolefin material of the present invention may contain additives selected from dyes and pigments, flame retardants, UV-stabilisers, anti-oxidants, carbon black, anti-ageing additives, processing additives and combinations thereof. If the material of the invention comprises different layers, these conventional additives can be present in one or more of these different layers, preferably in all layers.

The materials of the present invention can be in the form of tapes, films, yarns and/or multifilaments.

In practice, the thickness of the tape, film or yarn will generally be up to 300, preferably between 10 and 300 µm. This is governed by the original film thickness and the stretch ratio, in particular the ratio of the speeds of the stretch rollers. The width of the tapes can vary over a wide range, such as from 25 µm up to 50 cm or more. The width of the films can also vary over a wide range, *e.g*. from 1 cm up to 150 cm or more.

In one embodiment, unidirectional oriented tape layers are produced by orienting the tapes completely stretched in one direction, after which the material can be compacted by applying heat and pressure. Furthermore, before consolidation, a second unidirectional layer (or more than one) can be added to the first unidirectional layer with the direction of the tapes in another direction than the first layer in order to create multi directional laminates, to form so-called crossply structures. In the case of non-co-extruded material (mono-materials), usually further polymeric films or tapes need to be applied in between the unidirectional tape layers to ensure that after applying heat and pressure, the materials are welded together.

In a further embodiment, the materials of the present invention (*i.e*. for instance in the form of tapes, films, yarns and/or multifilaments) can be further processed into sheets, using processes known per se, *e.g*. by weaving the tapes into a cloth, which may be followed by further steps, *e.g*. those described in WO-A-03/008190. To this end the materials are combined to form a woven or non-woven fabric, which may subsequently be heat treated and pressed. This can be done using the above-mentioned co-extruded materials or by using mono-materials. In the case of non-co-extruded material (mono-materials), usually further polymeric films or tapes need to be applied in between the materials of the invention (*e.g*. tapes) to ensure that after applying heat and pressure, the materials are welded together. These further films or tapes are usually very thin, *e.g*. having a thickness of 10 µm to 1000 µm.

Co-extruded or non-co-extruded materials may be combined in the form of woven or non-woven fabrics. These fabrics (woven or non-woven), prior to heat treatment, have the appearance of a piece of cloth; they are flexible and drapable and can be placed easily into a mould. Such a fabric differs from prior art materials in that its stiffness and strength are considerably higher. Typically for a woven fabric of the present invention a load of at least 250 N per cm fabric width is measured (following DIN 53857) at the breakage point of the tape, for a balanced fabric with a thickness of 130 nm and an areal density of 0.10 kg/m²

Rather than weaving the individual materials (for instance in the form of tapes, films, yarns and/or multifilaments) to pieces of cloth, the individual materials can also be applied in (hand) lay-up applications. For instance by placing tapes in a parallel fashion and subsequently applying pressure and heat to the mould.

By the heat treatment the individual fibres are welded together. In this way the structural integrity of the cloth will be guaranteed and after cooling a stiff sheet is formed. The pressing step can be carried out in a mould, resulting in a three-dimensional shaped product, but also flat plates can be produced in this way.

The heat treatment is typically carried out at a temperature between the softening point of the material of the outer layers (A) and the material of the central layer (B). A property of the heat treated material is the improved abrasion resistance and the resistance against delamination of the individual fibres.

The improved mechanical properties of the materials of the present invention, which make up the formed products (three-dimensional objects or plates) of this embodiment are reflected in the excellent mechanical properties of these products themselves. It is noted that the stiffness values (E-modulus) of the materials of the present invention (for instance in tapes, films, yarns and/or multifilaments) typically are different than the E-modulus of the products produced therefrom (plates and three dimensional structures). The same applies for tensile strength values. This difference is the result of the difference in structure.

The stiffness and tensile strength of tapes (or films, yarns or multifilaments) is typically measured according to ISO 527, as mentioned hereinabove. In this method, the tape is clamped at both ends in the direction of the length of the tape. Both clamped ends are moved in opposite directions relative to each other (*viz*. both ends are moving or only one end is moving; generally a set-up is used wherein one end is not moving) and stress-strain curves are recorded. The slope of the tangent to this stress-strain curve at the origin determines the E-modulus.

When the stiffness and tensile strength of products produced from these materials (*viz*. plates and three dimensional structures) is determined, typically a different test method is used, such as ISO 527-4. In this method a test piece from the product, typically measuring several square centimeters, is clamped and subjected to stress-strain measurement. The values thus recorded are typically lower than those of the tapes making up the product, because a substantial percentage (typically about 50% for a balanced fabric based sheet) of the tapes lies in a direction perpendicular to the direction in which the stress is applied. Consequently, the values measured for stiffness and tensile strength will generally be correspondingly lower. Nevertheless, the values measured for these products, in particular the stiffness values, are still considerably higher than values recorded for prior art materials.

In accordance with the present invention it is possible to produce objects (plates and three dimensional structures) having an E-modulus of at least 5.5 GPa, preferably at least 7 GPa, more preferably at least 8 GPa, as measured by ISO 527-4. The tensile strength of these objects can be as high as 200 MPa or more, preferably at least 250 MPa.

## Claims

1. Stretched polyolefin material having an E-modulus of at least 17 GPa and a strength of at least 400 MPa, comprising a polyolefin and a nano-material, which material is obtainable by a process comprising an extrusion step and a stretching step wherein the material is stretched at a stretch ratio of at least 16, wherein the nano-material comprises particles having at least one dimension of 1-100 nm.

2. Material according to claim 1, wherein the nano-material is a nucleating agent that is selected from inorganic nucleating agents and organic nucleating agents, wherein said inorganic nucleating agent is selected from plately shaped (layered) inorganic materials; fibrous or needle shaped materials; spherical materials; zeolites; alumina; silica; aluminosilicate materials; and combinations thereof, and wherein said organic nucleating agent is selected from sorbitol derivatives.

3. Material according to any of the previous claims, wherein the additive is used in an amount of 0.01 to 10 wt.%, based on the weight of the final stretched material.

4. Material according to any of the previous claims, wherein said stretch ratio is more than 20

5. Material according to any of the previous claims, comprising two different materials are co-extruded polyolefin materials, in particular two different polypropylene materials, wherein said nano-material is present in at least one of said different materials.

6. Material according to the previous claim, which is a monoaxially drawn polyolefin multilayer film, tape or yarn of the AB or ABA type, having a stretch ratio of more than 15, having an E-modulus of at least 17 GPa, substantially consisting of a central layer (B) of a polyolefin selected from polyethylene, polypropylene and combinations thereof, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.%.

7. Unidirectional plates and crossply plates comprising a material according to any of the claims 1-6.

8. Process for producing a stretched material, comprising the steps of:
providing a compound of a polyolefin material and a nano-material, wherein the nano-material is dispersed preferably on a molecular scale in the polyolefin material, extruding this compound, followed by a stretching step wherein the material is stretched to a total stretch ratio of at least 16.

9. Process according to claim 8, further comprising a step wherein said nano-material is first blended with a first portion of the polyolefinic material, thus producing a masterbatch, and subsequently mixing this masterbatch with the remainder of the polyolefinic material, prior to the extrusion step.

10. Process according to any of the claims 8-9, wherein said stretching comprises more than one stretching step, preferably carried out at different temperatures.

11. Process according to any of the claims 8-10, wherein at least one of said stretched materials is co-extruded with another polyolefinic material, which other polyolefinic material is optionally also produced in accordance with the process according to any of the claims 8-10.

12. Objectcomprising a stretched polyolefin material, which object has an E-modulus of at least 5.5 GPa, preferably at least 7 GPa, more preferably at least 8 GPa, as measured by ISO 527-4; and a tensile strength of at least 200 MPa, preferably at least 250 MPa, as measured by ISO 527-4.

13. Object according to claim 12, wherein said stretched polyolefin material is a stretched polyolefin material according to any of the claims 1-6, or a stretched polyolefin material obtainable by the process according to any of the claims 8-11.

14. Object according to claim 12 or 13, which is a woven or non-woven cloth, a plate or a three-dimensional structure.

15. Woven or non-woven fabric comprising a material according to any of the claims 1-6, having a load at break of 250 N per cm fabric width for a balanced fabric-material with a thickness of 130 nm and an areal density of 0.10 kg/m².

## Patentansprüche

1. Gestrecktes Polyolefinmaterial mit einem E-Modul von wenigstens 17 GPa und einer Festigkeit von wenigstens 400 MPa, umfassend ein Polyolefin- und ein Nanomaterial, welches Material durch ein Verfahren erzielbar ist, das einen Extrusionsschritt und einen Streckschritt umfasst, wobei das Material mit einem Streckverhältnis von wenigstens 16 gestreckt wird, wobei das Nanomaterial Partikel enthält, die zumindest eine Dimension von 1-100 nm haben.

2. Material nach Anspruch 1, wobei das Nanomaterial ein Nukleierungsmittel ist, das aus anorganischen Nukleierungsmlitteln und organischen. Nukleierungsmitteln ausgewählt wird, wobei das anorganische Nukleierungsmittel aus plättchenförmigen (geschichteten) anorganischen Materialien, faser- oder nadelförmigen Materialien, sphärischen Materialien, Zeolith, Aluminiumoxid, Kieselerde, Alumosilikatmaterialien und Kombinationen davon ausgewählt wird und wobei das organische Nukleierungsmittel aus Sorbitolderivaten ausgewählt wird.

3. Material nach einem der vorhergehenden Anspräche, wobei das Additiv in einer Menge von 0.01 bis 10 Gew.-% verwendet wird, bezogen auf das Gewicht des gestreckten Endmaterials.

4. Material nach einem der vorhergehenden Ansprüche, wobei das Streckverhältnis mehr als 20 beträgt.

5. Material nach einem der vorhergehenden Ansprüche, wobei zwei enthaltene Materialien koextrudierte Polyotofinmateriallen sind, insbemonderezwei verschiedene Polypropylenmatertallen, wobei das Nanomaterial in wenigstens einem der verschiedenen Materialien vorhanden ist.

6. Material nach dem vorhergehenden Anspruch, welches eine monoaxial gezogene Polyolefin-Mehrschichtfolie, ein Brand oder Garn des AB- oder ABA-Typs ist, mit einem Streckverhältnis größer als 15, mit einem E-Modul von wenigstens 17 GPa, im Wesentlichen bestehend aus einer zentralen Schicht (B) aus einem Polyolefin, das aus Polyethylen, Polypropylen und Kombinationen davon ausgewählt wird, und einer oder zwei weiteren Schichten (A) aus einem Polyolefin, das aus der gleichen Klasse wie das Material der zentralen Schicht B ausgewählt wird, wobei der DSC-Schmelzpunkt des Materials der anderen Schichten (A) niedriger ist als der DSC-Schmelzpunkt des Materials der zentralen Schicht (B), wobei die zentrale Schicht (B)zwischen 60 und 99 Gew.-% des Materials und die anderen Schichten (A) zwischen 1 und 50 Gew.-% ausmachen.

7. Unidirektionale Platten und Kreuzlagenplatten, umfassend ein Material gemäß einem der Ansprüche 1 bis 6.

8. Verfahren zur Herstellung eines gestreckten Materials, umfassend die Schritte:
Bereitstellen eines Gemisches eines Polyolefinmaterials und eines Nanomaterials, wobei das Nanomaterial vorzugsweise in molekularer Größenordnung in dem Polyolefinmaterial verteilt ist,
Extrudieren dieses Gemisches, gefolgt von einem Strickschritt, wobei das Material auf ein Gesamtstreckverhältnis von mindestens 16 gestreckt wird.

9. Verfahren nach Anspruch 8, ferner umfassend einen Schritt, in welchem das Nanomaterial mit einem ersten Teil des polyolefinischen Materials vermengt wird, wodurch ein Masterbatch gebildet wird und dieser Masterbatch dann vor dem Extrusionsschritt mit dem Rest des polyolefinischen Materials gemischt wird.

10. Vorfahren nach einem der Ansprüche 8 bis 9, wobei das Strecken mehr als einen Streckschritt umfasst und vorzugsweise bei unterschiedlichen Temperaturen durchgeführt wird.

11. Vorfahren nach einem der Ansprüche 8 bis 10, wobei zumindest eines der gestreckten Materialien mit einem weiteren polyolefinischen Material koextrudiert wird, wobei das weitere polyolefinische Material optional auch gemäß dem Verfahren nach einem der Ansprüche 8 bis 10 hergestellt wird.

12. Gegenstand, umfassend ein gestrecktes polyolefinisches Material, wobei das Objekt ein nach ISO 527-4 gemessenes E-Modul von wenigstens 5,5 GPa, vorzugsweise von wenigstens 1 GPa und weiterhin vorzugsweise von wenigstens 8 GPa und eine nach ISO 527-4 gemessene Zufestigkeit von weinigstens 200 MPa, vorzugsweise wenigstens 250 MPa, aufweist.

13. Gegenstand nach Anspruch 12, wobei das gestreckte polyolefine Material ein gestrecktes Polyolefinmaterial gemäβ einem der Ansprüche 1 bis 6 bzw. ein gestrecktes Polyolefinmaterial ist, dass durch ein Verfahren gemäß einem der Ansprüche 8 bis 11 erzielbar ist.

14. Gegenstand nach Anspruch 12 oder 13, weiches ein Gewebe oder ein Vlies, eine Platte oder ein dreidimensionales Gebilde ist.

15. Gewebe oder Vliesstoff, umfassend ein Material gemäß einem der Ansprüche 1 bis 6, mit einer maximalen Bruchlast von 250 N pro cm Stoffbreite bei einem balancierten Gewebematerial mit einer Dicke von 130 nm und einer Flächendichte von 0,10 kg/m².

## Revendications

1. Matériau de polyoléfine étiré présentant un module d'élasticité d'au moins 17 GPa et une résistance d'au moins 400 MPa, comprenant une polyoléfine et un nanomatériau, lequel matériau peut être obtenu par un procédé comprenant une étape d'extrusion et une étape d'étirement où le matériau est étiré à un rapport d'étirement d'au moins 16, où le nanomatériau comprend des particules présentant au moins une dimension allant de 1 à 109 nm.

2. Matériau selon la revendication 1, où le nanomatériau est un agent de nucléation qui est sélectionné à partir du groupe constitué d'agents de nucléation inorganiques et d'agents de nucléation organiques, où ledit agent de nucléation inorganique est sélectionné à partir du groupe constitué de matériaux inorganiques (en couches) à forme plate, de matériaux en forme d'aiguille ou fibreux, de matériaux sphériques, de zéolites, d'alumine, de silice, de matériaux d'aluminosilicate et de combinaison de ceux-ci, et où ledit agent de nucléation organique est sélectionné à partir de dérivés de sorbitol.

3. Matériau selon l'une quelconque des revendications précédentes, dans lequel l'additif est utilisé suivant une proportion allant de 0,01 à 10% en poids, sur la base de la masse du matériau étiré final.

4. Matériau selon l'une quelconque des revendications précédentes, dans lequel ledit rapport d'étirement est supérieur à 20.

5. Matériau selon l'une quelconque des revendications précédentes, comprenant deux matériaux différents qui sont des matériaux de polyoléfine co-extrudés, en particulier deux matériaux de polypropylène différents, où ledit nanomatériau est présent dans au moins l'un desdits matériaux différents.

6. Matériau selon la revendication précédente, qui est un film, une bande ou un fil présentant de multiples couches de polyoléfine étiré monoaxialement du type AB ou ABA, présentant un rapport d'étirement supérieur à 15, présentant un module d'élasticité d'au moins 17 GPa, constitué principalement d'une couche centrale (B) d'une polyoléfine sélectionnée à partir du groupe constitué de polyéthylène, de polypropylène et de combinaison de ceux-ci, et d'une ou de deux autres couches (A) d'une polyoléfine provenant de la même classe que le matériau de la couche centrale B, le point de fusion DSC du matériau desdites autres couches (A) étant inférieur au point de fusion DSC du matériau de ladite couche centrale (B), où la couche centrale (B) est comprise entre 50 et 99% en poids du matériau et les autres couches (A) sont comprises entre 1 et 50 % en poids.

7. Plaques unidirectionnelles et plaques à configuration croisée comprenant un matériau selon l'une quelconque des revendications 1 à 6.

8. Procédé de production d'un matériau étiré, comprenant les étapes comprenant :
la fourniture d'un composé d'un matériau de polyoléfine et d'un nanomatériau, où le nanomatériau est dispersé de préférence à une échelle moléculaire dans le matériau de polyoléfine, l'extrusion de ce composé, suivie d'une étape d'étirement, où le matériau est étiré à un rapport d'étirement total d'au moins 16.

9. Procédé selon la revendication 8, comprenant en outre une étape, où ledit nanomatériau est tout d'abord mélangé avec une première partie du matériau de polyoléfine, en produisant ainsi un lot maître, et le mélange ultérieur de ce lot maître avec le reste du matériau de polyoléfine, avant l'étape d'extrusion.

10. Procédé selon l'une quelconque des revendications 8 à 9, où ledit étirement comprend plusieurs étapes d'étirement, de préférence effectuées à différentes températures.

11. Procédé selon l'une quelconque des revendications 8 à 10, où au moins un desdits matériaux étirés est co-extrudé avec un autre matériau de polyoléfine, lequel autre matériau de polyoléfine est optionnellement également produit conformément au procédé selon l'une quelconque des revendications 8 à 10.

12. Objet comprenant un matériau de polyoléfine étiré, lequel objet présente un module d'élasticité d'au moins 5,5 GPa de préférence d'au moins 7 GPa, de façon davantage préférée d'au moins 8 GPa, comme mesuré selon l'ISO 527-4, et une résistance à la traction d'au moins 200 MPa, de préférence d'au moins 250 MPa, comme mesuré selon l'ISO 527-4.

13. Objet selon la revendication 12, où ledit matériau de polyoléfine étiré est un matériau de polyoléfine étiré selon l'une quelconque des revendications 1 à 6, ou un matériau de polyoléfine étiré pouvant être obtenu par le procédé selon l'une quelconque des revendications 8 à 11.

14. Objet selon la revendication 12 ou 13, lequel est un tissu tissé ou non tissé, une plaque ou une structure à trois dimensions.

15. Etoffe tissée ou non tissée comprenant un matériau selon l'une quelconque des revendications 1 à 6, présentant une charge à la rupture de 250 N/cm de largeur d'étoffe pour un matériau d'étoffe équilibré présentant une épaisseur de 180 nm et une masse surfacique de 0,10 Kg/m².
